# EUROPÄISCHE PATENTSCHRIFT

(11) **EP 4 163 452 B1**
(45) Veröffentlichungstag und Bekanntmachung des Hinweises auf die Patenterteilung: **09.07.2025**
(21) Anmeldenummer: 22200496.2
(22) Anmeldetag: 10.10.2022
(51) Int. Cl.: E04D 3/14, F24S 20/67, F24S 25/30, F24S 25/61, H02S 20/23

(54) **SCHRÄGDACHAUFBAU**
PITCHED ROOF CONSTRUCTION
STRUCTURE DE TOIT INCLINÉ

(30) Priorität: 11.10.2021 AT 508092021
(43) Veröffentlichungstag der Anmeldung: 12.04.2023
(73) Patentinhaber: Julius Fritsche GmbH, 5102 Anthering (AT)
(72) Erfinder: Hölzl, Christian, 5020 Salzburg (AT)
(74) Vertreter: Babeluk Patentanwälte GmbH

(56) Entgegenhaltungen:
- EP-A1- 2 886 973
- EP-A1- 2 937 646
- WO-A2-2013/092682
- DE-U1- 202019 002 746
- JP-A- 2003 147 910
- US-A1- 2010 313 501

## Beschreibung

Die Erfindung betrifft einen Schrägdachaufbau mit mehreren Paneelen, vorzugsweise aus Glas, und zumindest zwei Paneelreihen, wobei eine obere Paneelreihe mit oberen Paneelen eine untere Paneelreihe mit unteren Paneelen überragt.

Solche Schrägdächer können als Dächer für Gebäude dienen oder auch weitgehend frei von vertikalen Wänden stehen und zum Beispiel als Pergola eine Terrasse oder eine Abstellfläche für Fahrzeuge verwendet werden. Dabei ist wesentlich, dass der Dachaufbau möglichst dicht gegenüber Regen ist. Andererseits soll der Aufbau so einfach und schnell wie möglich sein.

Werden größere Paneele wie Glaspaneele verwendet, so ist sowohl für die Dichtheit als auch für die baulich benachbarten Teile wichtig, dass die Bauteile des Schrägdachaufbaus gut aufeinander abgestimmt positioniert werden. Ansonsten kann es bei ungleichmäßigem Aufbau zu Lücken oder Auskragungen kommen, die die Dichtungslücken bedingen oder benachbarte Bauteile wie Wände behindern.

In der DE 201 10 896 U1 wird ein Dachaufbau offenbart, der keilförmige Auflageleisten montiert auf Dachlatten aufweist, wobei das hintere Ende der unteren Leiste und das vordere Ende der oberen Leiste führbar ist. Dieser Aufbau ist sehr komplex und schwierig im Zusammenbau.

In der US 2,546,430 A werden keilförmige Abdeckungen zur Anordnung auf der Oberseite der Paneele offenbart, wobei obere Abdeckungen untere Abdeckungen überragen.

Die US 2021/0054629 A1 beschreibt ein Schrägdach, bei dem die Paneele die direkt darunter liegenden Paneele, also die oberen Paneele die unteren Paneele entlang der Falllinie, überragen. Dies bedingt das Abfließen des Regenwassers von den oberen Paneelen auf die unteren und auf die wiederum darunter angeordneten Paneele, solange bis das untere Dachende erreicht ist. Dabei sind entlang der Länge der Paneele mehrere keilförmige, voneinander beabstandete Abstandselemente angeordnet, die die Paneele derart positionieren, dass die oberen Seiten der unteren Paneele unterhalb der unteren Seiten der oberen Paneele liegen. Dies bedingt eine sichere und weitgehend dichte Position der Paneele, ist jedoch sehr aufwändig in der Konstruktion. Die Position sämtlicher Abstandselemente muss genau ausgemessen werden, damit es nicht zu schiefen Paneelen kommt oder der Spalt zwischen den Paneelen im Bereich der Überragung nicht zu groß wird.

Die DE 3003865 A1 offenbart Dachziegel, welche an ihren Seiten keilförmig aufgebaut sind, womit sich ebenso eine schuppige Anordnung ergibt. Der Aufbau ist wegen der geringen Zahl an unterschiedlichen Teilen recht einfach und schnell. Dies ist bei Schrägdachaufbauten mit Paneelen wegen deren Größe und Material kaum umsetzbar, da der Herstellungsprozess von Paneelen solch komplexer Form sehr schwierig und kostenintensiv ist.

Die EP 2 886 973 A1, DE 20 2019 002746 U1, JP 2003 147910 A, US 2010/313501 A1 und WO 2013/092682 A2 offenbaren Schrägdachaufbauten, deren Sparrenauflageträger einander überlappen, um das Regenwasser abzuleiten. Werden jedoch Photovoltaikpaneele oder beleuchtete Paneele verwendet, so müssen die Kabel zwischen den Sparrenauflageträgern geführt werden, was aufwändig ist. Darüber hinaus sind die Kabel so ungeschützt.

Aufgabe der Erfindung ist damit, einen Schrägdachaufbau bereitzustellen, der möglichst dicht und sicher, aber auch möglichst einfach aufbaubar ist.

Diese Aufgabe wird erfindungsgemäß durch die kennzeichnenden Merkmale des Anspruchs 1 gelöst. Erfindungsgemäß ist vorgesehen, dass die Sparrenauflageträger der oberen Paneelreihe die Sparrenauflageträger der unteren Paneelreihe überragen.

Damit kann ein dichterer Schluss am Treffpunkt der Paneele erreicht werden. Denn es kann vorgesehen sein, dass zwei benachbarte Paneele einer Paneelreihe nicht direkt aneinander liegen, während sie am gleichen Sparrenauflageträger aufliegen. In diesem Freiraum kann Wasser entlang der Falllinie herabrinnen und könnte ansonsten am unteren Ende des Sparrenauflageträgers in den Bereich zwischen diesem und seinen darunterliegenden Sparrenauflageträger eindringen. Dies wird durch das Überragen verhindert.

Durch die Überragung wird ein Bereich geschützt, welcher ansonsten besonders anfällig auf eintretendes Regenwasser ist. Denn in diesem Punkt treffen insgesamt bis zu vier Paneele aufeinander. Durch das Überragen des unteren Sparrenauflageträgers durch den oberen wird das Wasser, das entlang der Falllinie herabrinnt, vom oberen direkt auf den unteren Sparrenauflageträger weiter abgeleitet, ohne dass es die Möglichkeit hätte, in den Bereich zwischen den Sparrenauflageträgern einzudringen. Dies gilt auch für schräg ablaufendes Wasser, beispielsweise durch Windeinwirkung.

Gleichzeitig ist der Aufbau des Dachaufbaus erleichtert, da der untere Sparrenauflageträger bereits die zukünftige Position des oberen Sparrenauflageträgers anzeigt. Damit ist der Aufbau und die Anordnung eines Sparrenauflageträgers nach dem anderen sehr schnell und präzise möglich.

Es kann vorgesehen sein, dass in den Bereichen, in denen die Sparrenauflageträger der oberen Paneelreihe und der Sparrenauflageträger der unteren Paneelreihe überragen zwischen den Sparrenauflageträgern zumindest teilweise Keildichtungen angeordnet sind, und dass vorzugsweise die Keildichtungen an den Sparrenauflageträger der oberen Paneelreihe befestigt sind. Diese Keildichtungen können das Eindringen des Wassers entgegen der Schwerkraftrichtung in den Spalt zwischen den Sparrenauflageträgern verhindern. Damit wird selbst bei besonders ungünstigen Windbedingungen ein möglichst dichter Schrägdachaufbau gewährleistet.

Vorzugsweise ist vorgesehen, dass zumindest ein Sparrenauflageträger einen Hauptkörper und einen vom Hauptkörper betriebsmäßig trennbaren Fortsatz aufweist und dass der Fortsatz zumindest einen Teil des Bereichs, vorzugsweise den gesamten Bereich, des Sparrenauflageträgers umfasst, der einen anderen Sparrenauflageträger überragt. Mit betriebsmäßig trennbar ist dabei gemeint, dass der Fortsatz während des Aufbaus des Schrägdaches ein Zusammenbau oder ein Auseinandernehmen für den Fachmann möglich ist, ohne dass es dabei zu einer Zerstörung der Teile kommt. Vorzugsweise ist daher vorgesehen, dass der Fortsatz und der Hauptkörper über eine Steckverbindung oder eine andere formschlüssige Verbindung verbindbar sind, und/oder dass sie mittels Schrauben, Nieten, Klammern oder anderen Befestigungsmitteln verbindbar sind.

Der Fortsatz kann ebenso zwei- oder mehrstückig ausgeführt sein.

Es kann auch vorgesehen sein, dass der Hauptkörper und der Fortsatz miteinander verschweißt werden.

Eine solche Ausführungsform ist besonders vorteilhaft, da so eine einfache Fertigung des Hauptkörpers unabhängig von der Form des Fortsatzes möglich ist. Der Fortsatz wiederum kann freier gestaltet werden, womit einfacher und kostengünstiger der Hauptkörper an dessen Hauptfunktion der Kraftübertragung angepasst werden kann und der Fortsatz an dessen Hauptfunktion der Verbindung zweier benachbarter Sparrenauflageträger und der sonstigen angrenzenden Teile.

Die Sparrenauflageträger liegen in der Regel auf Sparren auf, welche als tragende Elemente dienen. Abhängig von der Unterkonstruktion können die Sparrenauflageträger aber auch auf anderen Elementen der Unterkonstruktion anliegen, beispielsweise auf Platten eines Unterdaches.

Bei Richtungs- oder Positionsangaben wie oben oder unten wird von einer bestimmungsgemäßen Anwendungsposition des Schrägdachaufbaus ausgegangen, bei dem der Schrägdachaufbau in Bezug zum Untergrund schräg entlang der Falllinie angeordnet ist. Falls der Schrägdachaufbau mehrere schräge Flächen besitzt, wie beispielsweise bei einem Satteldach, dann gilt dies jeweils für die schrägen Flächen. Dem entsprechend ist die obere Seite eines Paneels jene Seite, die sich in bestimmungsgemäßer Einbaulage näher am Dachfirst angeordnet ist, während die untere Seite jene ist, die in Richtung der Dachtraufe zeigt.

Mit keilförmig ist dabei gemeint, dass die Sparrenauflageträger entlang ihrer Längserstreckung an Dicke oder Höhe verlieren. Vorzugsweise verlieren sie von einem Ende zum anderen Ende, besonders vorzugsweise kontinuierlich und linear. Es kann aber auch vorgesehen sein, dass der Sparrenauflageträger ein im Wesentlichen Profil gleichbleibender Dicke aufweist und an einem Ende einen Ausschnitt und/oder an einem Ende zumindest ein Distanzelement aufweist. So wird durch den Ausschnitt die Dicke an einem Ende herabgesetzt und/oder die Dicke durch das Distanzelement vergrößert. Auch so kann eine erfindungsgemäße Keilform erreicht werden. Es können natürlich auch mehrere Distanzelemente vorgesehen sein, die entlang der Längserstreckung des Sparrenauflageträgers verteilt sind und in Richtung eines Endes zunehmende Dicke aufweisen. Dier ermöglicht eine bessere Kraftableitung.

Mit überragen ist dabei eine schuppige Anordnung der Paneelreihen oder Sparrenauflageträger gemeint. Mit anderen Worten ist eine untere Kantenseite eines oberen Elements wie der oberen Paneelreihe oberhalb (bzw. "über") einer oberen Kantenseite eines unteren Elements, wie der unteren Paneelreihe angeordnet und jenseits der oberen Kantenseite des unteren Elements. Es kommt also zu einer Überlappung, wobei sich dieser Überlappungsbereich bei den Paneelreihen und/oder bei den Sparrenauflageträgern in der Regel auf wenige Zentimeter, also meist weniger als 20 cm beschränkt.

Die Paneele einer Paneelreihe sind vorzugsweise nebeneinanderliegend angeordnet und überlappen sich damit nicht.

Die obere Paneelreihe ist entlang des Schrägdachaufbaus oberhalb einer unteren Paneelreihe mit unteren Paneelen angeordnet.

Vorzugsweise liegt jedes Paneel auf zumindest zwei Sparrenauflageträgern auf.

Mit Schrägdachaufbau ist dabei ein Dachaufbau gemeint, der zumindest eine zum Erdboden schiefe Fläche aufweist, also in einem einfachen Fall beispielsweise ein Pultdach. In komplexeren Ausführungen können auch Satteldächer, Scheddächer Walmdächer usw. vorgesehen sein.

Besonders vorteilhaft ist, wenn sich die Sparrenauflageträger im Wesentlichen über die gesamte Länge der Paneele erstrecken, die auf ihnen gelagert sind. Damit wird sichergestellt, dass das Gewicht des Paneels gleichmäßig auf den Sparrenauflageträger und in weiterer Folge auf den kraftaufnehmenden Teil, auf dem der Sparrenauflageträger angeordnet ist, abgeleitet wird. Darüber hinaus ist nur ein Sparrenauflageträger pro Paneel entlang von dessen Länge notwendig, womit die Sparrenauflageträger alle die gleichen Dickenverläufe und Form aufweisen können.

Vorzugsweise weisen die Sparrenauflageträger im Wesentlichen die gleiche Länge wie die Paneele auf. Damit wird sichergestellt, dass sich die Sparrenauflageträger im gleichen Rhythmus entlang der Falllinie angeordnet werden, wie die Paneele.

Besonders vorteilhaft ist, wenn die Paneele auf Sparrenauflageträgern gelagert sind, welche keilförmig sind und dass die Sparrenauflageträger in Längsrichtung aneinander liegen.

Dadurch, dass die Sparrenauflageträger in Längsrichtung, in der Regel also in Falllinie, aneinander liegen, wird der Aufbau wesentlich vereinfacht. Die Sparrenauflageträger können einfach nacheinander und hintereinander auf die tragende Struktur, meist parallele Sparren, angeordnet und angebracht werden. Eine genaue Abmessung zur exakten Positionierung ist nicht mehr notwendig, da ein Sparrenauflageträger bereits die Position des nächsten Sparrenauflageträger anzeigt und festlegt. Die keilförmige Form der Sparrenauflageträger legt die Position der Paneele fest, wodurch diese nicht an die genauen Winkel der Anordnung angepasst werden müssen, sondern sich automatisch eine schuppige Anordnung ergibt. Dies bedingt auch eine höhere Flexibilität, da so die gleichen Paneele für Sparrenauflageträger verschiedener Ausführungsformen verwendbar sind und so die gleichen Paneele für verschiedene Dachkonstruktionen benutzt werden können.

Besonders vorteilhaft ist dabei, wenn die Sparrenauflageträger der unteren Paneelreihe in die Sparrenauflageträger der oberen Paneelreihe eingesteckt sind. Dies ermöglicht einerseits eine besonders dichte Anordnung und andererseits eine besonders einfache Handhabung während des Zusammenbaus. Dabei kann vorgesehen sein, dass sich das längsseitige Anliegen der Sparrenauflageträger durch die Verjüngung der ineinandergesteckten Sparrenauflageträger ergibt. Alternativ können die Sparrenauflageträger auch quer zur Längsrichtung orientierte Auflagewände aufweisen.

In einer bevorzugten Ausführungsform ist vorgesehen, dass die Sparrenauflageträger an ihrem dickeren Ende eine Ausnehmung zur Aufnahme der dünneren Enden anderer Sparrenauflageträger aufweisen. Dies bedingt eine gute Einsteckbarkeit und verbessert den Abfluss des Wassers entlang der Falllinie.

Es kann vorgesehen sein, dass die Sparrenauflageträger je zumindest einen Kabelkanal aufweisen, welche sich vorzugsweise über deren gesamte Länge erstreckt und dass die Sparrenauflageträger besonders vorzugsweise an ihren dickeren Enden und dünneren Enden Eingangsöffnungen zu dem Kabelkanal aufweisen. Dies ist insbesondere sinnvoll, wenn Leitungen wie Kabel oder Rohre im Dachaufbau geführt werden sollen, beispielsweise von Solaranlagen oder Photovoltaikanlagen. Durch die Kabelkanäle wird die sichere und geschützte Führung der Leitungen sichergestellt, gleichzeitig sind diese nicht sichtbar und stören nicht den optischen Eindruck des Schrägdachaufbaus.

Besonders vorteilhaft ist, dass die Sparrenauflageträger im Bereich von ihrem dünneren Ende zumindest eine seitliche Ausnehmung zur Durchführung von Kabeln aufweisen. Insbesondere bei Photovoltaikpanelen ist dies vorteilhaft.

Erfindungsgemäß weisen die Sparrenauflageträger an ihren dickeren Enden zumindest eine Abrutschsicherung zur Sicherung der Paneele vor dem Herunterrutschen auf, welche vorzugsweise eine Haltenase aufweist. Da Schrägdachaufbauten in der Regel Steigungen von bis zu 45° oder gar mehr aufweisen können, können die Paneele so vor dem Abrutschen gehindert werden.

Es kann auch vorgesehen sein, dass die Abrutschsicherung der Sparrenauflageträger der oberen Paneelreihe die unteren Paneele der unteren Paneelreihe überragt. Dies ist besonders vorteilhaft, da so die Abrutschsicherung sowohl das Abrutschen als auch das Eindringen des Regens in den Übergangsbereich der Paneelreihen verhindern kann.

In einer bevorzugten Ausführungsform ist vorgesehen, dass auf zumindest zwei Sparrenauflageträgern jeweils zwei Paneele gelagert sind. Damit sind die Sparrenauflageträger also an den Seiten der Paneele angeordnet und die beiden aneinandergrenzenden Paneele liegen jeweils auf den Sparrenauflageträgern auf. Dies bedingt eine gute Kraftableitung und gleichzeitig eine möglichst materialsparende Ausführung.

Um eine besonders dichte Ausführung zu erlangen, ist vorgesehen, dass im Bereich der Überragung zwischen zumindest einem oberen Paneel und zumindest einem unteren Paneel eine Querdichtung angeordnet ist, welche sich vorzugsweise über die gesamte obere Seite des unteren Paneels erstreckt und sich besonders vorzugsweise bis zwischen dem unteren Paneel und den Abrutschsicherungen der Sparrenauflageträger des oberen Paneels erstreckt. Die Querdichtung kann zwischen dem unteren Paneel und der Abrutschsicherung eingeklemmt sein.

Die Querdichtung erstreckt sich somit im Wesentlichen quer zur Falllinie und dichtet den Spalt zwischen zwei übereinander angeordneten Paneelen im Überragungsbereich ab. Durch die Erstreckung über die gesamte obere Seite des unteren Paneels wird sichergestellt, dass die Dichtung über die gesamte Breite des Paneels erreicht wird. Wenn die Querdichtung zwischen dem unteren Paneel und den Abrutschsicherungen der Sparrenauflageträger des oberen Paneels eingeklemmt ist, so wird auch der Treffpunkt der aneinander kommenden Sparrenauflageträger weiter abgedichtet. Damit wird ein vollständiger Verschluss des Bereichs erreicht. Vorzugsweise ist die Querdichtung mit einem Paneel, besonders vorzugsweise dem unteren Paneel, verklebt, und in Richtung des anderen Paneels zumindest teilweise vorgespannt. Dies bewirkt, dass die Querdichtung an das andere Paneel drückt und so einen dichten Schluss bildet.

In diesem Sinne ist vorgesehen, dass die Querdichtung einen Anbringabschnitt zum Anbringen an einem der Paneele und einen Federabschnitt zum Anlegen an dem anderen Paneel, mit vorzugsweise gebogenem Querschnitt, aufweist.

Erfindungsgemäß ist der Teil des Federabschnitts, der sich zwischen zwei Abrutschsicherungen befindet, nicht zwischen dem unteren Paneel und den Abrutschsicherungen eingeklemmt Dabei ist entweder vorgesehen, dass die Querdichtung im Bereich zwischen dem unteren Paneel und den Abrutschsicherungen der Sparrenauflageträger des oberen Paneels, keinen Federabschnitt aufweist oder, dass der Federabschnitt im Bereich zwischen dem unteren Paneel und den Abrutschsicherungen der Sparrenauflageträger des oberen Paneels vom übrigen Federabschnitt zumindest teilweise getrennt ist. Dies kann beispielsweise durch einen Schnitt am Rand der Abrutschsicherung erreicht werden, der zumindest einen Teil des Federabschnitts, vorzugsweise der gesamte Federabschnitt, durchtrennt. Dies ist besonders vorteilhaft, da der Federabschnitt im Bereich zwischen Abrutschsicherung und unterem Paneel in der Regel stark zusammengedrückt wird. Außerhalb dieses zusammengedrückten Bereichs bedingt die Vorspannung des Federabschnitts, dass er sich an das obere Paneel anschmiegt und den Spalt abdichtet. Am Randbereich der Abrutschsicherung kann der Federabschnitt aber mitunter bei einem größeren Spalt diesen nicht vollständig verschließen, da er von der Abrutschsicherung stark nach unten gezogen wird, womit eine Dichtungslücke entstehen kann. Wenn der Federabschnitt aber nicht eingeklemmt wird, so kann er sich auch am Randbereich der Abrutschsicherung frei entfalten und den Spalt zum oberen Paneel abdichten.

Dabei kann auch vorgesehen sein, dass zumindest ein Paneel, vorzugsweise alle Paneele ein Photovoltaikelement umfasst. Insbesondere bei Photovoltaikpaneelen ist eine erfindungsgemäße Konstruktion sinnvoll, da diese eine gute Lagerung der Paneele und viele Möglichkeiten der Kabelführung ermöglicht. Da jedes Photovoltaikelement mit Kabeln verbunden werden muss, ist eine praktikable Führung wichtig.

Weiters ist besonders vorteilhaft, wenn die Materialstärke zumindest eines Sparrenauflageträgers in dem Bereich, in dem er zumindest einen anderen Sparrenauflageträger überragt, herabgesetzt ist. Dabei ist gemeint, dass der Bereich, in dem zumindest ein Sparrenauflageträger zumindest einen anderen Sparrenauflageträger überragt, eine geringer Materialstärke aufweist. Mit geringer ist dabei gemeint, dass die Materialstärke niedriger ist als in dem anderen Bereich des Sparrenauflageträgers, also in den Bereichen, die hauptsächlich zur Ableitung der Gewichtskraft der Paneele eingerichtet sind. Diese können durch eine hohe Materialstärke auch schwere Paneele problemlos tragen und festlegen. Die überragenden Bereiche jedoch, nehmen nur geringe Gewichtskraft auf und dienen vor allem zur Verbindung und Abdeckung der benachbarten Sparrenauflageträger. Daher müssen sie nicht so dick ausgeführt sein und können so besser geformt werden.

Die Erfindung wird im Folgenden anhand der nicht einschränkenden Figuren näher erläutert. Es zeigen:
- Fig. 1: eine erfindungsgemäße erste Ausführungsform eines Schrägdachaufbaus in einer perspektivischen Ansicht;
- Fig. 2: eine erfindungsgemäße erste Ausführungsform eines Sparrenauflageträgers in einer perspektivischen Ansicht;
- Fig. 3: ein Detail des Sparrenauflageträgers aus Fig. 2;
- Fig. 4: ein Detail einer Seitenansicht der Ausführungsform aus Fig. 1;
- Fig. 5: ein Detail einer erfindungsgemäßen zweiten Ausführungsform eines Schrägdachaufbaus in einer perspektivischen Ansicht;
- Fig. 6: ein Detail einer nicht erfindungsgemäßen Ausführungsform eines Schrägdachaufbaus in einer perspektivischen Ansicht;
- Fig. 7: ein Detail einer erfindungsgemäßen zweiten Ausführungsform eines Sparrenauflageträgers in einer perspektiven Ansicht;
- Fig. 8: der Fortsatz der zweiten Ausführungsform des Sparrenauflageträgers aus Fig. 7 alleine dargestellt
- Fig. 9: ein Detail einer erfindungsgemäßen dritten Ausführungsform eines Sparrenauflageträgers in einer perspektiven Ansicht;
- Fig. 10: ein Ausschnitt von zwei Sparrenauflageträgern der dritten Ausführungsform aus Fig. 9 in einer zusammengebauten Stellung.

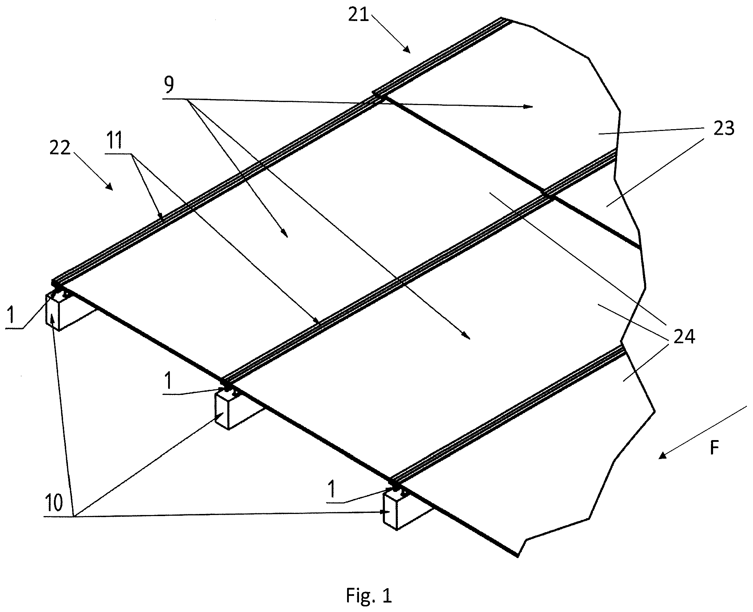

Fig. 1 zeigt eine erste Ausführungsform eines Schrägdachaufbaus als Pultdach, welcher mehrere Paneelreihen 21,22 aufweist, wobei nur die zwei letzten entlang der Falllinie, also die untersten im Bereich der Traufe dargestellt sind. Die Paneele 23, 24 jeder Paneelreihe 21, 22 liegen nebeneinander, wobei sie sich nicht seitlich überragen. Sie liegen jeweils auf zwei Sparrenauflageträgern 1 auf. Diese Sparrenauflageträger 1 sind auf Sparren 10 angeordnet, welche als Träger und Unterkonstruktion dienen und sich im Wesentlichen entlang der Falllinie F des Schrägdachaufbaus erstrecken.

Die Paneele 23 der zweituntersten Paneelreihe 21 grenzen and die Paneele 24 der untersten Paneelreihe 22 und überragen sie um einige Zentimeter. Damit stellt die zweitunterste Paneelreihe 21 in Bezug zur untersten Paneelreihe 22 eine obere Paneelreihe 21 dar und die unterste Paneelreihe 22 stellt in Bezug zur zweituntersten Paneelreihe 21 eine untere Paneelreihe 22 dar.

Nicht dargestellt ist eine drittunterste Paneelreihe, welche an der oberen Seite der zweituntersten an diese grenzt und die Paneele der zweituntersten Paneelreihe überragt. Damit stellt in Bezug zur drittuntersten Paneelreihe die zweitunterste eine untere Paneelreihe dar und die drittunterste in Bezug zur zweiuntersten eine obere Paneelreihe.

Jedes Paneel 23, 24 wird an seinen beiden Seiten von jeweils einem Sparrenauflageträger 1 getragen. Dabei trägt jeder Sparrenauflageträger 1 zwei benachbarte Paneele 23, 24 und schließt damit den Spalt zwischen ihnen ab.

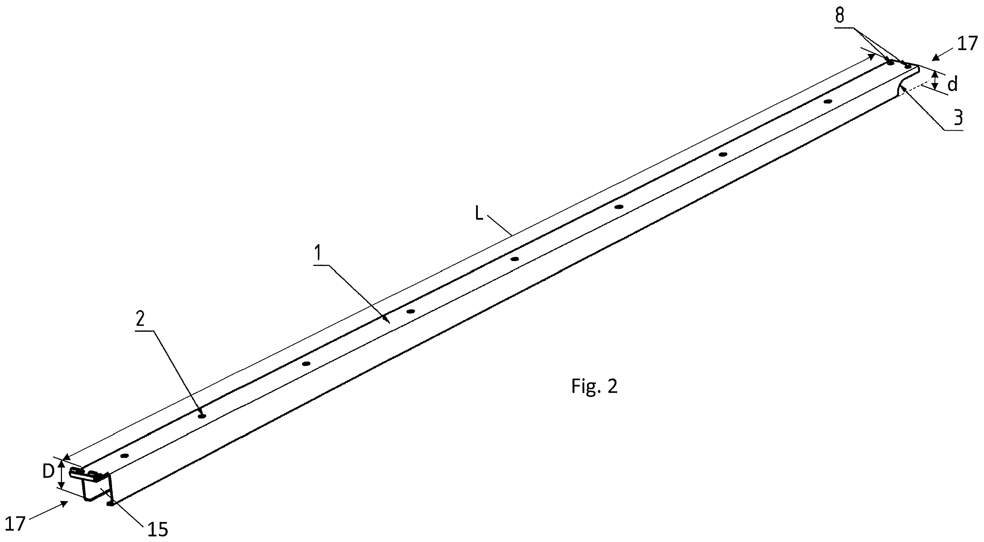

Fig. 2 zeigt einen Sparrenauflageträger 1 im Detail. Dieser ist als Konstruktionsprofil ausgeführt und keilförmig ausgeführt und weist eine Länge L entlang seiner Längsrichtung auf, entlang derer sich seine Dicke kontinuierlich, vorzugsweise linear von einem Ende zum anderen vermindert. An einem dickeren Ende weist der Sparrenauflageträger 1 eine größere Dicke D auf und an einem dünneren Ende eine geringere Dicke d.

Entlang des Sparrenauflageträgers 1 sind in gleichmäßigen Abständen Befestigungsöffnungen 2 vorgesehen, welche zum Fixieren auf der Unterkonstruktion dienen. Beispielsweise mittels Schrauben kann so der Sparrenauflageträger 1 auf einem Sparren 10 angeschraubt werden.

Der Sparrenauflageträger 1 ist als Hohlprofil ausgeführt und weist vorzugsweise eine U-Form mit zueinander zeigenden Auflagezungen 5 an der offenen Seite, zur Auflage an der Unterkonstruktion auf. Damit bildet der Sparrenauflageträger 1 in seinem Inneren einen Kabelkanal 15 welcher sich von einer Eingangsöffnung 17 an einem Ende bis zu einer Eingangsöffnung 17 am anderen Ende erstreckt.

Vorzugsweise entspricht die Differenz der Dicke d am dünneren Ende und der Höhe der Eingangsöffnung 17 am dickeren Ende im Wesentlichen der Dicke eines Paneels an dessen oberen Seite. Falls ein Pufferelement wie ein Auflagedämpfer oder dergleichen zwischen Paneel und dem Sparrenauflageträger 1, auf dem es aufliegt, vorgesehen ist, so kann vorgesehen sein, dass die Differenz der Dicke d am dünneren Ende und der Höhe der Eingangsöffnung 17 am dickeren Ende im Wesentlichen der Dicke eines Paneels und des Pufferelements an dessen oberen Seite entspricht.

Am dünneren Ende des Sparrenauflageträgers 1 weist dieser auf der Unterseite, also der dem Paneel abgewandten Seite, seitliche Ausnehmungen 3 auf, vorzugsweise an beiden Seiten. Diese dienen zur Durchführung von Kabeln aus dem Kabelkanal 15, wenn mehrere Sparrenauflageträger 1 hintereinander angeordnet sind. In anderen Ausführungsformen kann diese Ausnehmung 3 oder Ausnehmungen 3 auf einemanderen Ort entlang der Längserstreckung L angeordnet sein, beispielsweise in etwa auf mittlerer Länge oder im Bereich des dickeren Endes.

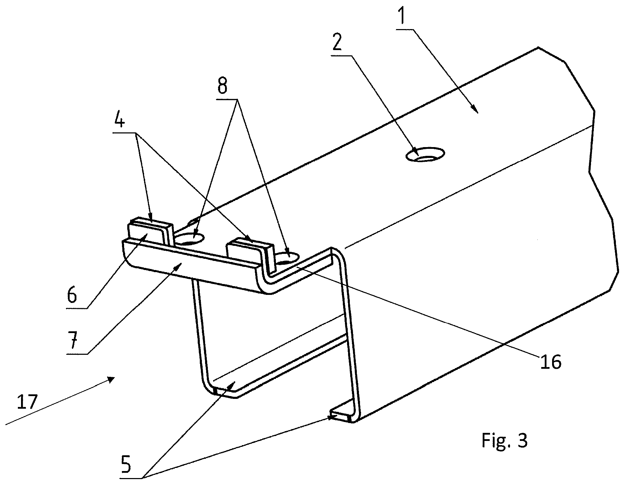

Das dickere Ende des Sparrenauflageträgers 1 ist in Fig. 3 vergrößert dargestellt. Dabei ist sichtbar, dass am dickeren Ende an der den Paneelen zugewandten Seite des Sparrenauflageträgers 1, also der Oberseite, eine Abrutschsicherung 16 aufweist. Diese Abrutschsicherung 16 erstreckt sich entlang der der Längsrichtung und weist an seinem Ende eine Haltenase 6 auf, welche sich quer zur Längsrichtung nach oben, also von dem Sparren 10 weg, erstreckt. Werden Paneele 23, 24 auf den Sparrenauflageträger 1 abgelegt, so wird deren Abrutschen in Längsrichtung durch die Haltenase 6 verhindert.

An einer Unterseite, also an der der Unterkonstruktion zugewandten Seite weist die Abrutschsicherung 16 eine Keildichtung 7 auf, welche vorzugsweise aus einem elastischen Material wie einem Kunststoff ist. An der dem Sparrenauflageträger 1 zugewandten Seite der Haltenasen 6 sind Auflagepuffer 4, vorzugsweise aus Gummi, angeordnet, welche ein Springen der Paneele im Berührungsbereich mit den Haltenasen 6 verhindern. Die Abrutschsicherung 16 weist weiters zwei Montageöffnungen 8 auf. Diese Montageöffnungen 8 dienen dazu, eine Verblechung am Dachrand zu befestigen.

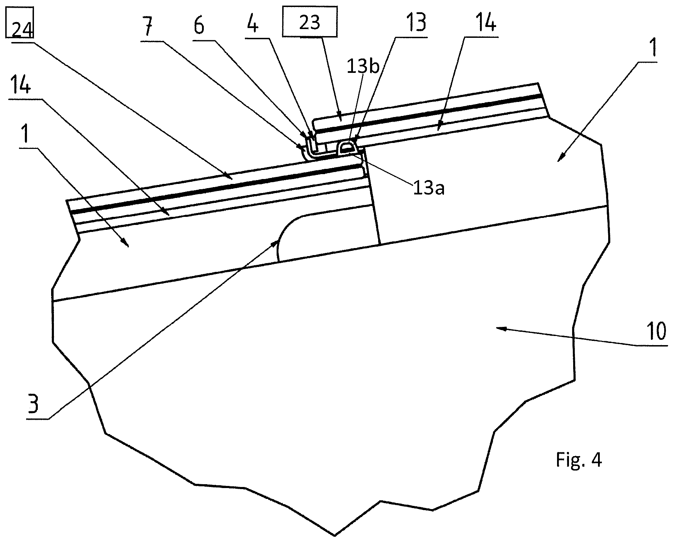

Fig. 4 zeigt einen Ausschnitt einer Seitenansicht im Bereich des Übergangs von einer oberen Paneelreihe 21 zu einer unteren Paneelreihe 22, wobei zur besseren Ansicht der letzte Sparren und die daran angeordneten Sparrenauflageträger 1 nicht gezeigt sind. Dabei ist sichtbar, dass ein oberes Paneel 23 der oberen Paneelreihe 21 auf einem oberen Sparrenauflageträger 1 aufliegt und ein unteres Paneel 24 einer unteren Paneelreihe 22 auf einem unteren Sparrenauflageträger 1 aufliegt. Dabei stehen die Sparrenauflageträger 1 in deren Längsrichtung aneinander an, wobei die Abrutschsicherung 16 des oberen Sparrenauflageträgers 1 das dünnere Ende des unteren Sparrenauflageträgers 1 überragt. Die obere Seite des unteren Paneels 23 erstreckt sich bis zum oder fast bis zum oberen Sparrenauflageträger 1 und liegt an dessen Keildichtung 7 an. Damit wird verhindert, dass in diesen Spalt Wasser eindringt. Seitlich der Abrutschsicherung 16 erstreckt sich eine Querdichtung 13, welche sich entlang der oberen Seite des unteren Paneels 24 quer zu den Sparrenauflageträgern 1 erstreckt. Die Querdichtung 13 weist einen Anbringabschnitt 13a auf, über den sie mit dem unteren Paneel 23 verklebt ist. Darüber hinaus weist es einen Federabschnitt 13b auf, welcher eine Bogenform aufweist und in Richtung des oberen Paneels elastisch vorgespannt ist. Dies bedingt ein Andrücken am oberen Paneel 24.

Die Paneele 23,24 ruhen auf ihren Sparrenauflageträgern 1. Zum besseren Halt und um Sprünge zu vermeiden, sind zwischen den Paneelen 23, 24 und den Sparrenauflageträgern 1 Glasaufnahmebänder 14 vorgesehen, welche als Dichtelement wirken und ein sicheres Aufliegen bedingen.

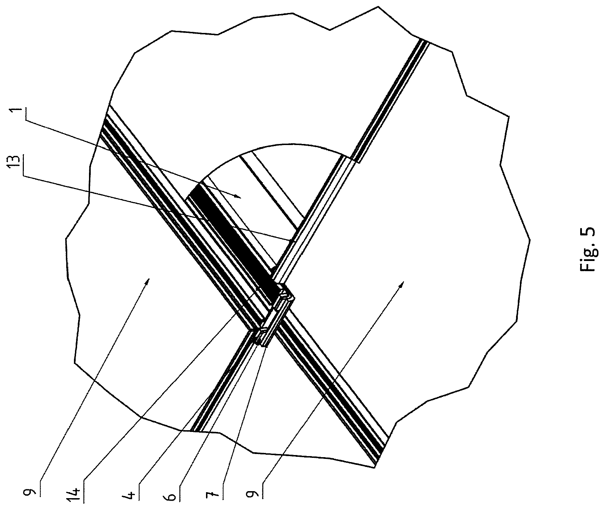

Fig. 5 zeigt eine zweite Ausführungsform der Erfindung in einem Detail, wobei zur besseren Ansicht ein Teil eines oberen Paneels 24 ausgeschnitten wurde. Die Ausführungsform ist der ersten sehr ähnlich, deswegen wird hier nur auf die wichtigsten Unterschiede eingegangen. Wirkgleiche Elemente haben die gleichen Bezugszeichen.

Die zweite Ausführungsform weist eine Querdichtung 13 auf, welche sich über die gesamte Breite des unteren Paneels 24 erstreckt. Dadurch wird die Querdichtung 13 zwischen der Abrutschsicherung 16 und dem unteren Paneel 24 eingeklemmt. Dabei wurde jedoch nach dem Einklemmen und vor Auflegen des oberen Paneels 23 ein Schnitt durch den Federabschnitt 13b entlang der Seitenkante der Abrutschsicherung 16 gemacht. Damit wurde der Teil des Federabschnitts 13b, der eingeklemmt ist, von jenem Teil, der es nicht ist und sich direkt zwischen oberen und unteren Paneel 23, 24 befindet, getrennt. Damit ist der Federabschnitt 13b frei beweglich und kann sich in Richtung des oberen Paneels 23 entfalten. Der Anbringabschnitt 13a hingegen verläuft durchgehend und ununterbrochen, womit eine lückenlose Abdichtung erreicht wird.

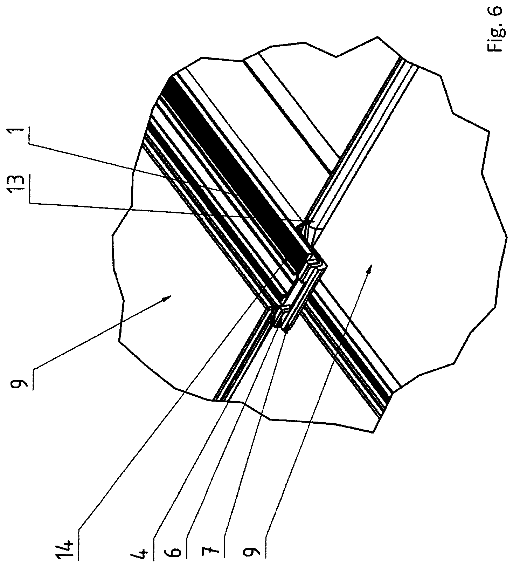

Fig. 6 zeigt eine nicht erfindungsgemäße Ausführungsform in einem Detail, wobei zur besseren Ansicht ein Teil eines oberen Paneels 24 ausgeschnitten wurde. Die Ausführungsform ist der zweiten sehr ähnlich, deswegen wird hier nur auf die wichtigsten Unterschiede eingegangen. Wirkgleiche Elemente haben die gleichen Bezugszeichen.

Diese nicht erfindungsgemäße Ausführungsform entspricht der ersten, wobei der beschriebene Schnitt im Federabschnitt 13b nicht durchgeführt wurde und der einstückige Federabschnitt 13b unter der Abrutschsicherung 16 eingeklemmt ist. Dadurch kommt es zu einem Einknicken des Federabschnitts 13b im Bereich seitlich der Abrutschsicherung 16 und zu einem Eindrücken, womit eine Abdichtung des Spaltes zwischen oberen und unterem Paneel 23, 24 mitunter unvollständig ist.

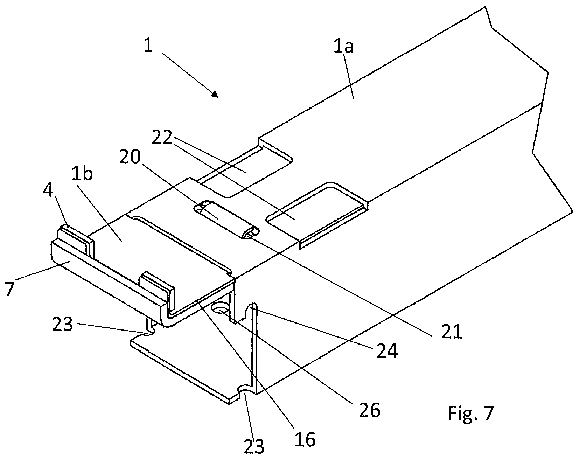

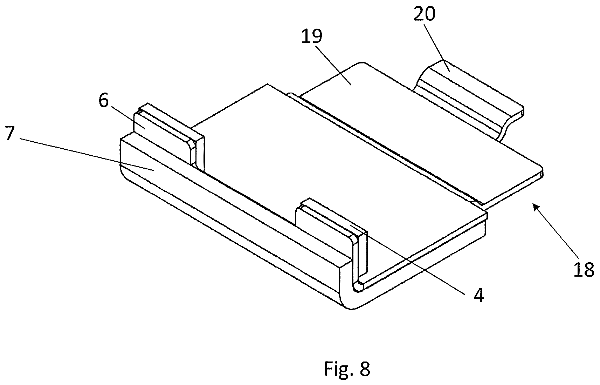

In den Figuren 7 und 8 wird eine alternative Ausführungsform eines Sparrenauflageträgers 1 gezeigt, der der ersten Ausführungsform in Figs. 2 - 4 stark ähnelt. Daher wird hier nur auf die wesentlichsten Unterschiede eingegangen und gleichwirkende Teile mit gleichen Bezugszeichen versehen.

Der dargestellte Sparrenauflageträger 1 ist im Wesentlichen zweistückig ausgeführt und weist einen Hauptkörper 1a und einen Fortsatz 1b auf. Der Hauptkörper stellt dabei jenen Teil dar, der hauptsächlich die Gewichtskraft der Paneele 23,24 aufnimmt. Der Fortsatz 1b hingegen bildet den Bereich des Sparrenauflageträgers 1, unter dem der nächstangereihte Sparrenauflageträger 1 angeordnet wird. Der Fortsatz 1b ist also im Wesentlichen jener Bereich, der den nächstangereihten Sparrenauflageträger 1 überragt.

Der Fortsatz 1b ist dabei an dem distalen Ende des Sparrenauflageträgers 1 im Wesentlichen wie der gleiche Bereich des Sparrenauflageträgers 1 aus den Figuren 2-4 aufgebaut, er weist eine Sparrenauflageträgers Abrutschsicherung 16, sowie Auflagepuffer 4 und eine Keildichtung 7 auf.

An seinem gegenüberliegenden Ende weist er einen Verankerungsbereich 18 auf, der in dieser Ausführungsform einen Unterführungsbereich 19 zum Untergreifen des Materials des Hauptkörpers und eine Einführlasche 20 zum Durchführen in eine entsprechende Öffnung 21 an der Oberseite des Hauptkörpers 1a aufweist. Damit wird eine formschlüssige Verbindung zwischen Hauptkörper 1a und Fortsatz 1b erreicht.

Der Hauptkörper 1a dieser Ausführungsform weist auch an seiner Oberseite zwei Einsetzöffnungen 22 zum Einsetzen von Querverstrebungen auf. Diese Querverstrebungen können als Querverbindung zwischen zwei Sparrenauflageträgern 1 auf gleicher Höhe angeordnet werden und dienen zur Querversteifung des Paneelunterbaus. Diese Einsetzöffnungen 22 können auch bei jeder anderen Ausführungsform von Sparrenauflageträgern 1 angewendet werden und können bevorzugt an den Enden der Sparrenauflageträger 1 und/oder auch auf anderen Höhen entlang von derer Längserstreckung angeordnet werden. Des Weiteren weist der Hauptkörper 1a an seinem dickeren Ende, also an dem Ende, an dem der Fortsatz 1b angeordnet ist, zwei halbkreisförmige Ausnehmungen 23 auf. Diese dienen zur gemeinsamen Schraubenverbindung mit einem direkt daran anschließenden Sparrenauflageträger 1.

Darüber hinaus weist der Hauptkörper an seinem dickeren Ende an der dem Paneel zugewandten Seite Haken 24 auf, welche in den Sparrenauflageträger 1, der von dem Fortsatz 1b überlappt wird, hintergreifen und festlegen kann.

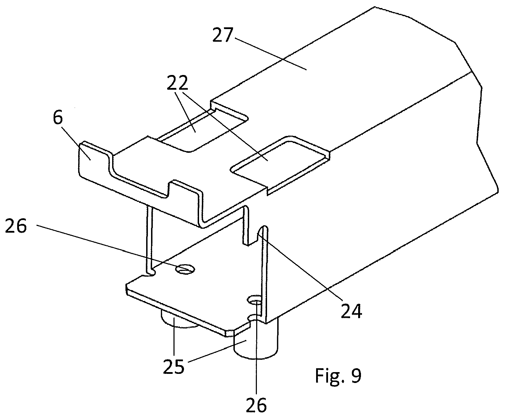

In Fig. 9 wird eine dritte Ausführungsform gezeigt, die keinen betriebsmäßig trennbaren Fortsatz aufweist. Jedoch weist er wie die zweite Ausführungsform die Haken 24 sowie die Ausnehmungen 23 auf, womit klar ersichtlich ist, dass diese Merkmale bei jeder Ausführungsform, zusammen oder getrennt voneinander, anwendbar sind.

Darüber hinaus weist in dieser Ausführungsform der Sparrenauflageträger 1 ein Konstruktionsprofil mit im wesentlichen gleichbleibenden Querschnitt auf, es verjüngt sich das Profil also nicht in der Höhe von einem Ende zum anderen wie in der ersten Ausführungsform gezeigt. Damit dennoch eine Keilform erreicht wird, weist der Sparrenauflageträger 1 jedoch zwei Distanzelemente 25 auf, welche an am Konstruktionsprofil an dessen Unterseite angeordnet sind. Diese bewirken eine erhöhte Abstützung dieses Endes des Konstruktionsprofils, womit die obere Fläche 27 des Sparrenauflageträgers 1 in Bezug auf einen ebenen Untergrund schief verläuft und sich damit im Gesamten eine Keilform ergibt.

Die Einsetzöffnungen 22 sind auf gleicher Höhe wie Befestigungsöffnungen 26 angeordnet, welche auf der Unterseite des Sparrenauflageträgers 1 angeordnet sind. Dies bedingt einen besonders einfachen Zusammenbau, da so Befestigungsmittel 27 wie Schrauben durch die Einsetzöffnungen 22 hindurch in die Befestigungsöffnungen 26 eingesetzt und angebracht werden können. Dies kann auch bei jeder anderen beliebigen Ausführungsform vorgesehen sein. In dieser Ausführungsform sind vorzugsweise auf gleicher Höher die Distanzelemente 25 angeordnet, welche ebenso durch die gleichen Befestigungsmittel 27 fixierbar sind.

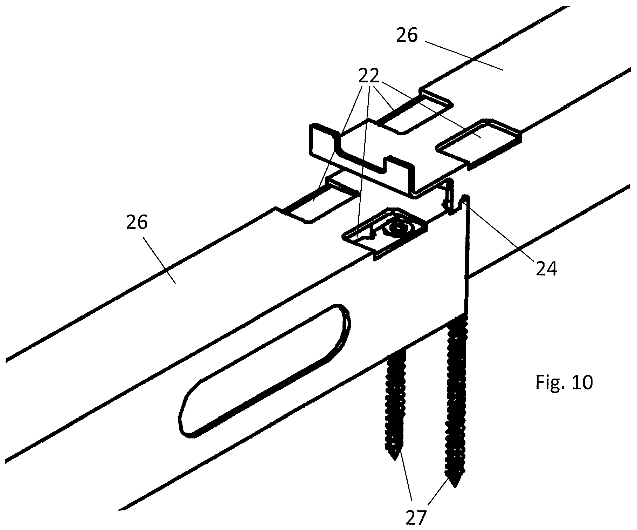

In der Fig. 10 werden zwei Sparrenauflageträger 1 der dritten Ausführungsform in bestimmungsgemäßer zusammengebauter Stellung auf einem ebenen, in der Figur nicht dargestellten Untergrund gezeigt. Dabei ist ersichtlich, dass die Distanzelemente 25 des oberen Sparrenauflageträgers 1 zu einer höheren Position des Endes des Konstruktionsprofils führt, das zum unteren Sparrenauflageträger 1 zeigt und somit der untere Sparrenauflageträger 1 teilweise überragt wird. Die Haken 24 des oberen greifen in dafür vorgesehene Öffnungen des unteren Sparrenauflageträgers 1 ein und legen ihn fest.

## Patentansprüche

1. Schrägdachaufbau mit mehreren Paneelen (23, 24), vorzugsweise aus Glas, und zumindest zwei Paneelreihen (21, 22), wobei eine obere Paneelreihe (21) mit oberen Paneelen (23) eine untere Paneelreihe (22) mit unteren Paneelen (24) überragt, wobei die Paneele (23, 24) auf Sparrenauflageträgern (1) gelagert sind, welche keilförmig sind und dass die Sparrenauflageträger (1) der oberen Paneelreihe (21) die Sparrenauflageträger (1) der unteren Paneelreihe (22) überragen und wobei die Sparrenauflageträger (1) an ihren dickeren Enden zumindest eine Abrutschsicherung (16) zur Sicherung der Paneele vor dem Herunterrutschen aufweisen, **dadurch gekennzeichnet, dass** im Bereich der Überragung zwischen zumindest einem oberen Paneel (23) und zumindest einem unteren Paneel (24) eine Querdichtung (13) angeordnet ist, welche sich über die gesamte obere Seite des unteren Paneels (24) erstreckt und zwischen dem unteren Paneel (24) und den Abrutschsicherungen (16) der Sparrenauflageträger (1) des oberen Paneels (22) eingeklemmt ist und dass die Querdichtung (13) einen Anbringabschnitt (13a) zum Anbringen an einem der Paneele (23, 24) und einen Federabschnitt (13b) zum Anlegen an dem anderen Paneel (23, 24) aufweist, wobei vorgesehen ist,
- dass die Querdichtung (13) im Bereich zwischen dem unteren Paneel (24) und den Abrutschsicherungen (16) der Sparrenauflageträger des oberen Paneels (23), keinen Federabschnitt (13b) aufweist, oder
- dass der Federabschnitt (13b) im Bereich zwischen dem unteren Paneel (24) und den Abrutschsicherungen (16) der Sparrenauflageträger des oberen Paneels (23) vom übrigen Federabschnitt (13b) zumindest teilweise getrennt ist;
so dass der Teil des Federabschnitts (13b), der sich zwischen zwei Abrutschsicherungen (16) befindet, nicht zwischen dem unteren Paneel (24) und den Abrutschsicherungen (16) eingeklemmt ist.

2. Schrägdachaufbau nach Anspruch 1, **dadurch gekennzeichnet, dass** in den Bereichen, in denen die Sparrenauflageträger (1) der oberen Paneelreihe (21) und der Sparrenauflageträger (1) der unteren Paneelreihe (22) überragen zwischen den Sparrenauflageträgern (1) zumindest teilweise Keildichtungen (7) angeordnet sind, und dass vorzugsweise die Keildichtungen (7) an den Sparrenauflageträger (1) der oberen Paneelreihe (21) befestigt sind.

3. Schrägdachaufbau nach Anspruch 1 oder 2, **dadurch gekennzeichnet, dass** zumindest ein Sparrenauflageträger (1) einen Hauptkörper und einen vom Hauptkörper betriebsmäßig trennbaren Fortsatz aufweist und dass der Fortsatz zumindest einen Teil des Bereichs, vorzugsweise den gesamten Bereich, des Sparrenauflageträgers (1) umfasst, der einen anderen Sparrenauflageträger (1) überragt.

4. Schrägdachaufbau nach einem der Ansprüche 1 bis 3, **dadurch gekennzeichnet, dass** die Sparrenauflageträger (1) in Längsrichtung aneinander liegen.

5. Schrägdachaufbau nach einem der Ansprüche 1 bis 4, **dadurch gekennzeichnet, dass** die Sparrenauflageträger (1) der unteren Paneelreihe (22) in die Sparrenauflageträger (1) der oberen Paneelreihe (21) eingesteckt sind.

6. Schrägdachaufbau nach einem der Ansprüche 1 bis 5, **dadurch gekennzeichnet, dass** die Sparrenauflageträger (1) an ihrem dickeren Ende eine Ausnehmung zur Aufnahme der dünneren Enden anderer Sparrenauflageträger (1) aufweisen.

7. Schrägdachaufbau nach einem der Ansprüche 1 bis 6, **dadurch gekennzeichnet, dass** die Sparrenauflageträger (1) je zumindest einen Kabelkanal (15) aufweisen, welche sich vorzugsweise über deren gesamte Länge (L) erstreckt und dass die Sparrenauflageträger (1) besonders vorzugsweise an ihren dickeren Enden und dünneren Enden Eingangsöffnungen (17) zu dem Kabelkanal (15) aufweisen.

8. Schrägdachaufbau nach einem der Ansprüche 1 bis 7, **dadurch gekennzeichnet, dass** die Sparrenauflageträger (1), vorzugsweise im Bereich von ihrem dünneren Ende, zumindest eine seitliche Ausnehmung (3) zur Durchführung von Kabeln aufweisen.

9. Schrägdachaufbau nach einem der Ansprüche 1 bis 8, **dadurch gekennzeichnet, dass** die Abrutschsicherung (16) eine Haltenase (6) aufweist.

10. Schrägdachaufbau nach einem der Ansprüche 1 bis 9, **dadurch gekennzeichnet, dass** die Abrutschsicherung (16) der Sparrenauflageträger (1) der oberen Paneelreihe (21) die unteren Paneele (24) der unteren Paneelreihe (22) überragt.

11. Schrägdachaufbau nach einem der Ansprüche 1 bis 10, **dadurch gekennzeichnet, dass** auf zumindest zwei Sparrenauflageträgern (1) jeweils zwei Paneele (23, 24) gelagert sind.

12. Schrägdachaufbau nach einem der Ansprüche 1 bis 11, **dadurch gekennzeichnet, dass** der Federabschnitt (13b) zum Anlegen an dem anderen Paneel (23, 24) einen gebogenem Querschnitt aufweist.

13. Schrägdachaufbau nach einem der Ansprüche 1 bis 12, **dadurch gekennzeichnet, dass** die Materialstärke zumindest eines Sparrenauflageträgers (1) in dem Bereich, in dem er zumindest einen anderen Sparrenauflageträger (1) überragt, herabgesetzt ist.

## Claims

1. Pitched roof structure, comprising a plurality of panels (23, 24), preferably made of glass, and at least two rows of panels (21, 22), wherein an upper row of panels (21) with upper panels (23) extends beyond a lower row of panels (22) with lower panels (24), wherein the panels (23, 24) are mounted on rafter support beams (1) which are wedge-shaped, and that the rafter support beams (1) of the upper row of panels (21) project beyond the rafter support beams (1) of the lower row of panels (22) and wherein the rafter support beams (1) have at least one anti-slip guard (16) at their thicker ends to secure the panels against slipping down, **characterised in that** a transverse seal (13) is arranged in the region of the overhang between at least one upper panel (23) and at least one lower panel (24), which seal extends over the entire upper side of the lower panel (24) and is clamped between the lower panel (24) and the anti-slip guards (16) of the rafter support beams (1) of the upper panel (22), and **in that** the transverse seal (13) has an attachment section (13a) for attachment to one of the panels (23, 24) and a spring section (13b) for abutment against the other panel (23, 24), wherein it is provided
- that the transverse seal (13) has no spring section (13b) in the region between the lower panel (24) and the anti-slip guards (16) of the rafter support beams of the upper panel (23), or
- that the spring section (13b) in the region between the lower panel (24) and the anti-slip guards (16) of the rafter support beams of the upper panel (23) is at least partially separated from the remaining spring section (13b);
so that the portion of the spring section (13b) located between two anti-slip guards (16) is not clamped between the lower panel (24) and the anti-slip guards (16).

2. Pitched roof structure according to claim 1, **characterised in that** wedge seals (7) are arranged at least partially between the rafter support beams (1) in the regions in which the rafter support beams (1) of the upper panel row (21) and the rafter support beams (1) of the lower panel row (22) project, and **in that** preferably the wedge seals (7) are attached to the rafter support beam (1) of the upper row of panels (21).

3. Pitched roof structure according to claim 1 or 2, **characterised in that** at least one rafter support beam (1) has a main body and an extension that can be operationally separated from the main body, and **in that** the extension encompasses at least part of the region, preferably the entire region, of the rafter support beam (1) that extends over another rafter support beam (1).

4. Pitched roof structure according to one of claims 1 to 3, **characterised in that** the rafter support beams (1) are adjacent to one another in the longitudinal direction.

5. Pitched roof structure according to one of claims 1 to 4, **characterised in that** the rafter support beams (1) of the lower row of panels (22) are inserted into the rafter support beams (1) of the upper row of panels (21).

6. Pitched roof structure according to one of claims 1 to 5, **characterised in that** the rafter support beams (1) have a recess at their thicker end for receiving the thinner ends of other rafter support beams (1).

7. Pitched roof structure according to one of claims 1 to 6, **characterised in that** that the rafter support beams (1) each have at least one cable duct (15), which extends preferably over their entire length (L), and **in that** the rafter support beams (1) preferably have entrance openings (17) to the cable duct (15) particularly preferably at their thicker ends and thinner ends.

8. Pitched roof structure according to one of claims 1 to 7, **characterised in that** the rafter support beams (1), preferably in the region of their thinner end, have at least one lateral recess (3) for the passage of cables.

9. Pitched roof structure according to one of claims 1 to 8, **characterised in that** the anti-slip guard (16) has a holding nose (6).

10. Pitched roof structure according to one of claims 1 to 9, **characterised in that** the anti-slip guard (16) of the rafter support beams (1) of the upper row of panels (21) extends over the lower panels (24) of the lower row of panels (22).

11. Pitched roof structure according to one of claims 1 to 10, **characterised in that** two panels (23, 24) are mounted in each case on at least two rafter support beams (1).

12. Pitched roof structure according to one of claims 1 to 11, **characterised in that** the spring section (13b) for application to the other panel (23, 24) has a curved cross-section.

13. Pitched roof structure according to one of claims 1 to 12, **characterised in that** the material thickness of at least one rafter support beam (1) is reduced in the region where it overlaps at least one other rafter support beam (1).

## Revendications

1. Structure de toit incliné comprenant plusieurs panneaux (23, 24), de préférence en verre, et au moins deux rangées (21, 22) de panneaux, dans lequel une rangée (21) supérieure de panneaux ayant des panneaux (23) supérieurs s'élève plus haut qu'une rangée (22) de panneaux ayant des panneaux (24) inférieurs, dans laquelle les panneaux (23, 24) reposent sur des poutres (1) d'appui de chevron, qui sont cunéiformes, et en ce que les poutres (1) d'appui de chevron de la rangée (21) supérieure de panneaux s'élèvent au-dessus des poutres (1) d'appui de chevron de la rangée (22) inférieure de panneaux et dans laquelle les poutres (1) d'appui de chevron ont à leur extrémité la plus épaisse au moins une sécurité (16) vis-à-vis du glissement pour empêcher les panneaux de glisser vers le bas, **caractérisée en ce que** dans la partie du surplomb entre au moins un panneau (23) supérieur et au moins un panneau (24) inférieur est disposée un joint (13) transversal d'étanchéité, qui s'étend sur toute la face supérieure du panneau (24) inférieur et qui est serré entre le panneau (24) inférieur et les sécurités (16) vis-à-vis du glissement des poutres (1) d'appui de chevron du panneau (22) supérieur, et **en ce que** le joint (13) transversal d'étanchéité a un tronçon (13a) de montage pour le montage sur l'un des panneaux (23, 24) et un tronçon (13b) de ressort pour l'application à l'autre panneau (23, 34), dans lequel il est prévu
- que le joint (13) transversal d'étanchéité n'ait pas de tronçon (13b) de ressort dans la partie comprise entre le panneau (24) inférieur et les sécurités (16) vis-à-vis du glissement des poutres d'appui de chevron du panneau (23) supérieur ou
- que le tronçon (13b) de ressort soit séparé au moins en partie du reste du tronçon (13b) de ressort dans la partie comprise entre le panneau (24) inférieur et les sécurités (16) vis-à-vis du glissement des poutres d'appui de chevron du panneau (23) supérieur ;
de manière à ce que la partie du tronçon (13b) de ressort, qui se trouve entre deux sécurités (16) vis-à-vis du glissement, ne soit pas serrée entre le panneau (24) inférieur et les sécurités (16) vis-à-vis du glissement.

2. Structure de toit incliné suivant la revendication 1, **caractérisée en ce que,** dans les parties, dans lesquelles les poutres (1) d'appui de chevron de la rangée (21) supérieure de panneaux s'élèvent au-dessus des poutres (1) d'appui de chevron de la rangée (22) inférieure de panneaux, sont montées au moins en partie des joints (7) d'étanchéité à coin entre les poutres (1) d'appui de chevron et **en ce que**, de préférence, les joints (7) d'étanchéité à coin sont fixés aux poutres (1) d'appui de chevron de la rangée (21) supérieure de panneaux.

3. Structure de toit incliné suivant la revendication 1 ou 2, **caractérisée en ce qu'**au moins une poutre (1) d'appui de chevron a un corps principal et un prolongement pouvant en être séparé en fonctionnement et **en ce que** le prolongement comprend au moins une partie de la région, de préférence toute la région, de la poutre (1) d'appui de chevron, qui s'élève au-dessus d'une autre poutre (1) d'appui de chevron.

4. Structure de toit incliné suivant l'une des revendications 1 à 3, **caractérisée en ce que** les poutres (1) d'appui de chevron sont les unes à côté des autres dans la direction longitudinale.

5. Structure de toit incliné suivant l'une des revendications 1 à 4, **caractérisée en ce que** les poutres (1) d'appui de chevron de la rangée (22) inférieure de panneaux sont enfichées dans les poutres (1) d'appui de chevron de la rangée (21) supérieure de panneaux.

6. Structure de toit incliné suivant l'une des revendications 1 à 5, **caractérisée en ce que** les poutres (1) d'appui de chevron ont, à leur extrémité plus épaisse, un évidement de réception des extrémités plus minces, d'autres poutres (1) d'appui de chevron.

7. Structure de toit incliné suivant l'une des revendications 1 à 6, **caractérisée en ce que** les poutre (1) d'appui de chevron ont chacune au moins un conduit (15) pour un câble, qui s'étend de préférence sur toute leur longueur (L), et **en ce que** les poutres (1) d'appui de chevron ont, en particulier de préférence à leurs extrémités plus épaisses et à leurs extrémités plus minces, des ouvertures (17) d'entrée menant au conduit (15) pour un câble.

8. Structure de toit incliné suivant l'une des revendications 1 à 7, **caractérisée en ce que** les poutres (1) d'appui de chevron ont, de préférence dans la partie de leur extrémité plus mince, au moins un évidement (3) latéral pour le passage de câbles.

9. Structure de toit incliné suivant l'une des revendications 1 à 8, **caractérisée en ce que** la sécurité (16) vis-à-vis du glissement comporte un bec (6) d'arrêt.

10. Structure de toit incliné suivant l'une des revendications 1 à 9, **caractérisée en ce que** la sécurité (16) vis-à-vis du glissement des poutres (1) d'appui de chevron de la rangée (21) supérieure de panneau s'élève au-dessus des panneaux (24) inférieurs de la rangée (22) inférieure de panneaux.

11. Structure de toit incliné suivant l'une des revendications 1 à 10, **caractérisée en ce que** respectivement deux panneaux (23, 24) sont mis sur au moins deux poutres (1) d'appui de chevron.

12. Structure de toit incliné suivant l'une des revendications 1 à 11, **caractérisée en ce que** le tronçon (13b) de ressort a une section transversale incurvée pour l'application sur l'autre panneau (23, 24).

13. Structure de toit incliné suivant l'une des revendications 1 à 12, **caractérisée en ce que** l'épaisseur de matériau d'au moins l'une des poutres (1) d'appui de chevron diminue dans la partie, dans laquelle elle s'élève au-dessus d'au moins une autre poutre (1) d'appui de chevron.
